# EUROPEAN PATENT SPECIFICATION

(11) **EP 1 099 897 B1**
(45) Date of publication and mention of the grant of the patent: **20.09.2006**
(21) Application number: 00124656.0
(22) Date of filing: 10.11.2000
(51) Int. Cl.: F16L 37/084

(54) **Pipe with a fast-fit integral fitting**
Rohr mit integriertem Schnellanschlusselement
Tuyau avec accouplement à action rapide intégré

(30) Priority: 12.11.1999 IT TO990981
(43) Date of publication of application: 16.05.2001
(73) Proprietor: Dayco Fuel Management S.p.A., 10123 Torino (IT)
(72) Inventor: Di Biasi, Pietro, 10043 Orbassano (IT)
(74) Representative: Franzolin, Luigi

(56) References cited:
- EP-A- 0 829 671
- EP-A- 0 971 163
- US-A- 5 415 825
- US-A- 5 725 824

## Description

The present invention relates to plastic piping, in particular of the type used for automotive fluid supply, and applies preferably, though not exclusively, to automotive hydraulic systems, to which the following description refers purely by way of example.

Automotive hydraulic system piping, such as that connecting the radiator to the engine and passenger compartment heating system piping, is normally made of plastic material.

Such piping is connected to the hydraulic circuit components by means of a fitting, which comprises a fastening portion fitted to one end of the piping, and a connecting portion which, by means of an elastic retaining member, clicks onto a complementary connecting portion of a circuit component.

Such a solution increases manufacturing cost and poses assembly problems on account of the relatively large number of components involved, increases the length of the connection between the piping and relative circuit component, and increases the likelihood of leakage by requiring two separate sealing members, one between the fitting and piping, and one between the fitting and circuit component.

It is an object of the present invention to provide piping designed to eliminate the aforementioned drawbacks, and which, in particular, is more compact, cheaper to produce, easy to assemble, and provides for better sealing performance.

According to the present invention, there is provided piping of the type comprising a pipe and at least one fast-fit end fitting; said fitting comprising a fitting member connectable in fluidtight manner to a complementary fitting member, and a retaining member carried by the fitting member and having click-on locking means cooperating with said complementary fitting member; said retaining member being movable between a first position permitting axial withdrawal of the complementary fitting member, and a second position locking the complementary fitting member as disclosed in EP 0829671. The present invention is characterized in that said fitting member is integral with said pipe and at least one sealing member is interposed axially between the fitting member and the retaining member and cooperates in fluidtight manner with the complementary fitting member.

A preferred, non-limiting embodiment of the present invention will be described by way of example with reference to the accompanying drawings, in which:
Figure 1 shows a partial section of piping in accordance with the invention;
Figure 2 shows a front view of the Figure 1 piping;
Figure 3 shows an exploded view of the Figure 1 piping.

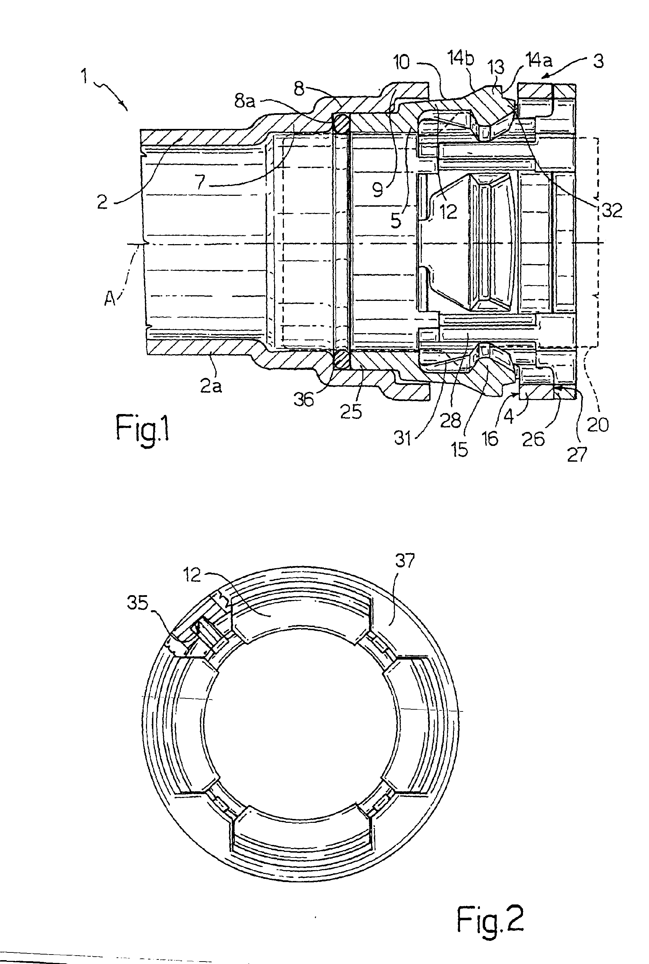

With reference to Figures 1 to 3, number 1 indicates as a whole piping comprising a pipe 2 made of plastic material, and a fast-fit end fitting 3.

Pipe 2 comprises a flexible main portion 2a of constant diameter; and a wider end portion, of axis A, defining a female fitting member 4 forming part of fitting 3 and for receiving a male fitting member 20.

Fitting 3 also comprises an annular retaining member 5 coaxial with and which clicks inside fitting member 4.

More specifically, fitting member 4 comprises a first portion 7, a second portion 8, and a third portion 9 axially adjacent to one another and of respective diameters increasing gradually from main portion 2a of pipe 2.

First and second portions 7, 8 define an annular shoulder 8a.

Third portion 9 of fitting member 4 comprises four substantially rectangular through openings 10 equally spaced circumferentially.

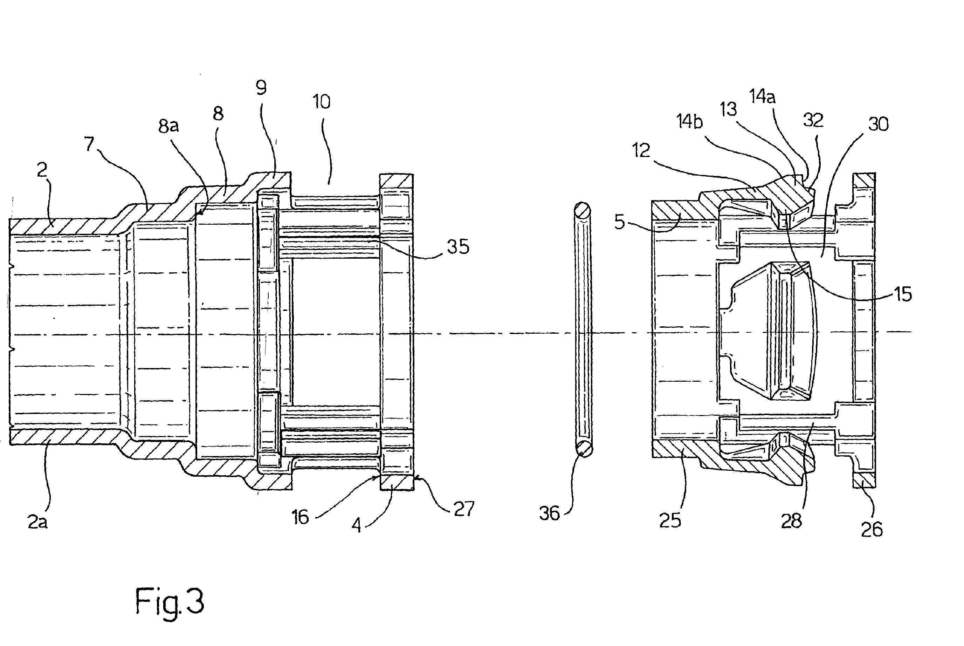

Retaining member 5 is fitted removably inside fitting member 4, as shown in Figure 3, and comprises a first tubular end portion 25 which fits with a small amount of radial clearance inside second portion 8 of fitting member 4, and an annular flange 26 defining the opposite axial end of member 5 and an axial stop by which member 5 rests against an end surface 27 of third portion 9 of fitting member 4. Retaining member 5 also comprises four longitudinal bars 28 connecting first portion 25 and flange 26 integrally, and forming respective windows 30.

At respective windows 30, four click-on locking members or tongues 12 project axially from first portion 25 of retaining member 5 towards flange 26, and provide for locking fitting member 4 and complementary fitting member 20 releasably to each other.

More specifically, close to their free ends 32, locking members 12 comprise respective outer teeth 13 having substantially serrated profiles and defined, towards flange 26, by respective radial sides 14a, and, towards first portion 25, by respective sloping sides 14b.

Locking members 12 also comprise respective inner teeth 15 having substantially trapezoidal profiles and which cooperate, in use, with an annular projection 31 of fitting member 20.

When retaining member 5 is inserted axially inside fitting member 4, locking members 12 flex inwards to enable teeth 13 to click past respective edges 16 of openings 10 and engage openings 10 to lock retaining member 5 axially. It should be noted that, in the axial stop position of retaining member 5 defined by flange 26 axially contacting surface 27, a certain amount of axial clearance exists between ends 32 of locking members 12 and edges 16 of openings 10.

Retaining member 5 is locked angularly inside fitting member 4 by longitudinal bars 28 of member 5 prismatically engaging respective guide grooves 35 (Figure 2) inside fitting member 4.

Finally, retaining member 5 comprises inner projections 37 extending radially inside flange 26 and for centering male fitting member 20.

Fitting 3 also comprises a sealing ring 36 housed inside second portion 8 of fitting member 4 and interposed between shoulder 8a and portion 25 of retaining member 5.

Piping 1 is connected to complementary fitting member 20 by simply inserting fitting member 20 axially inside retaining member 5; locking members 12 flex outwards to permit the passage of projection 31, and click past projection 31 to lock male fitting member 20 axially in an axial position in which one end of member 20 cooperates in fluidtight manner with seal 36.

When the hydraulic circuit of which piping 1 forms part is pressurized, and/or axial pull is exerted on male fitting member 20 or on piping 1, outer teeth 13 of locking members 12 axially contact edges 16 of respective openings 10. In this relative axial position, the ends 32 of locking members 12 are located on the inside of edges 16 and prevent locking members 12 from flexing outwards, and hence the male fitting member from being withdrawn.

To remove fitting member 20, axial force must be exerted on retaining member 5 to keep it in the limit position shown in Figure 1, in which locking members 12 are free to flex outwards. At this point, relative pull is simply exerted between the two fitting members 4, 20 to withdraw fitting member 20, the projection 31 of which flexes locking members 12 outwards.

Piping in accordance with the present invention can be obtained from a continuous plastic pipe made using conventional equipment for manufacturing corrugated pipe, such as an extruder and a movable-mold or corrugating molding unit. The continuous pipe is then cut into lengths having integral end fitting members 4 in which openings 10 are formed using known cutting equipment, such as mechanical, laser or water jet tools.

The advantages of the piping according to the present invention will be clear from the foregoing description.

In particular, end fittings 3 are axially compact by not comprising a fitting member separate from and fitted to the pipe; and eliminating one component reduces manufacturing cost and provides for fast easy assembly.

Clearly, changes may be made to the piping as described and illustrated herein without, however, departing from the scope of the present invention. For example, as opposed to one seal 36, two or more seals in series may be used to provide for redundant sealing.

## Claims

1. Piping of the type comprising a pipe (2) and at least one fast-fit end fitting (3); said fitting comprising a fitting member (4) connectable in fluidtight manner to a complementary fitting member (20), at least one sealing member (36) and a retaining member (5) carried by the fitting member (4) and having click-on locking means (12) cooperating with said complementary fitting member (20); said retaining member (5) being movable between a first position permitting axial withdrawal of the complementary fitting member (20), and a second position locking the complementary fitting member (20); **characterized in that** said fitting member (4) is integral with said pipe (2) and said at least one sealing member (36) is interposed axially between said fitting member (4) and said retaining member (5), and which cooperates in fluidtight manner with said complementary fitting member (20).

2. Piping as claimed in Claim 1, **characterized in that** said fitting member (4) is defined by a wider end portion of said pipe (2); said retaining member (5) being housed inside said fitting member (4) and being movable axially between said first and said second position.

3. Piping as claimed in Claim 1, **characterized in that** said fitting member (4) has at least one radial opening (10); and said click-on locking means (12) comprise at least one elastic tongue (12) having at least one outer locking member (13) for engaging said opening (10) in axially slack manner.

4. Piping as claimed in Claim 3, **characterized in that** said elastic tongue (12) comprises an inner locking member (15) cooperating with stop means (31) on said complementary fitting member (20).

## Patentansprüche

1. Rohrleitungseinrichtung des Typs, der ein Rohr (2) und wenigstens ein Schnellpassungs-Endverbindungsstück (3) umfasst; wobei das Verbindungsstück ein Verbindungselement (4), das auf eine fluiddichte Weise mit einem komplementären Verbindungsstück (20) verbindbar ist, wenigstens ein Dichtungselement (36) und ein von dem Verbindungselement (4) getragenes Halteelement (5) umfasst, das einrastbare Verriegelungsmittel (12) aufweist, die mit dem komplementären Verbindungselement (20) zusammenwirken; wobei das Halteelement (5) bewegbar ist zwischen einer ersten Position, die ein axiales Herausziehen des komplementären Verbindungselements (20) zulässt, und einer zweiten Position, die das komplementäre Verbindungselement (20) verriegelt; **dadurch gekennzeichnet, dass** das Verbindungselement (4) einstückig mit dem Rohr (2) ist und dass das wenigstens eine Dichtungselement (36) axial zwischen dem Verbindungselement (4) und dem Halteelement (5) eingefügt ist und in fluiddichter Weise mit dem komplementären Verbindungselement (20) zusammenwirkt.

2. Rohrleitungseinrichtung gemäß Anspruch 1, **dadurch gekennzeichnet, dass** das Verbindungselement (4) durch einen breiteren Endabschnitt des Rohrs (2) definiert ist; wobei das Halteelement (5) in dem Verbindungselement (4) eingeschlossen ist und zwischen der ersten und der zweiten Position axial bewegbar ist.

3. Rohrleitungseinrichtung gemäß Anspruch 1, **dadurch gekennzeichnet, dass** das Verbindungselement (4) wenigstens eine radiale Öffnung (10) aufweist; und dass die einrastbaren Verriegelungsmittel (12) wenigstens einen elastischen Ausläufer (12) umfassen, der wenigstens ein äußeres Verriegelungselement (13) aufweist, das in die Öffnung (10) mit axialem Spiel eingreift.

4. Rohrleitungseinrichtung gemäß Anspruch 3, **dadurch gekennzeichnet, dass** der elastische Ausläufer (12) ein inneres Verriegelungselement (15) umfasst, das mit Anschlagsmitteln (31) am komplementären Verbindungselement (20) zusammenwirkt.

## Revendications

1. Tubulure du type comprenant un tuyau (2) et au moins un raccord d'extrémité à adaptation rapide (3), ledit raccord comprenant un élément d'adaptation (4) pouvant être relié d'une manière étanche aux fluides à un élément d'adaptation complémentaire (20), au moins un élément d'étanchéité (36) et un élément de retenue (5) supporté par l'élément d'adaptation (4) et comportant des moyens de verrouillage par enclenchement (12) coopérant avec ledit élément d'adaptation complémentaire (20), ledit élément de retenue (5) pouvant être déplacé entre une première position permettant un retrait axial de l'élément d'adaptation complémentaire (20) et une seconde position verrouillant l'élément d'adaptation complémentaire (20), **caractérisée en ce que** ledit élément d'adaptation (4) est solidaire dudit tuyau (2) et ledit au moins un élément d'étanchéité (36) est intercalé axialement entre ledit élément d'adaptation (4) et ledit élément de retenue (5), et lequel coopère d'une manière étanche aux fluides avec ledit élément d'adaptation complémentaire (20).

2. Tubulure selon la revendication 1, **caractérisée en ce que** ledit élément d'adaptation (4) est défini par une partie d'extrémité plus large dudit tuyau (2), ledit élément de retenue (5) étant logé à l'intérieur dudit élément d'adaptation (4) et pouvant être déplacé axialement entre ladite première position et ladite seconde position.

3. Tubulure selon la revendication 1, **caractérisée en ce que** ledit élément d'adaptation (4) comporte au moins une ouverture radiale (10), et ledit moyen de verrouillage par enclenchement (12) comprend au moins une languette élastique (12) comportant au moins un élément de verrouillage extérieur (13) pour s'insérer dans ladite ouverture (10) avec un jeu axial.

4. Tubulure selon la revendication 3, **caractérisée en ce que** ladite languette élastique (12) comprend un élément de verrouillage intérieur (15) coopérant avec un moyen de butée (31) sur ledit élément d'adaptation complémentaire (20).
